Europäisches Patentamt

European Patent Office

Office européen des brevets

(19)

(11) Veröffentlichungsnummer : **0 105 155
B1**

(12) # EUROPÄISCHE PATENTSCHRIFT

(45) Veröffentlichungstag der Patentschrift :
22.01.86

(21) Anmeldenummer : 83108125.2

(22) Anmeldetag : 17.08.83

(51) Int. Cl.⁴ : **F 16 L 55/10**

(54) **Vorrichtung zum Einfrieren einer Flüssigkeit in einer Rohrleitung.**

(30) Priorität : 02.09.82 DE 3232603

(43) Veröffentlichungstag der Anmeldung :
11.04.84 Patentblatt 84/15

(45) Bekanntmachung des Hinweises auf die Patenterteilung : 22.01.86 Patentblatt 86/04

(84) Benannte Vertragsstaaten :
AT BE CH FR LI NL

(56) Entgegenhaltungen :
DD-A-    77 874
FR-E-    94 489

(73) Patentinhaber : **MESSER GRIESHEIM GMBH
Hanauer Landstrasse 330
D-6000 Frankfurt/Main 1 (DE)**

(72) Erfinder : **Biederbick, Manfred
Im Benraderfeld 135
D-4150 Krefeld (DE)** ·
Erfinder : **Jost, Gerhard
Hoeppnerstrasse 38
D-4150 Krefeld (DE)**

**Beschreibung**

Die Erfindung betrifft eine Vorrichtung zum Einfrieren einer Flüssigkeit in einer Rohrleitung zwecks Absperrung der Rohrleitung durch einen Eispfropfen.

Derartige Rohrverschlüsse werden bei Reparatur- oder Umbauarbeiten an flüssigkeitsführenden Rohrleitungssystemen gebildet, um Zeit und damit Kosten zu sparen. Beispielsweise können hierdurch defekte Absperrhähne in Heizungsanlagen oder Fernwärmenetzen ausgetauscht werden, ohne daß zuvor die gesamte Flüssigkeit aus der Anlage entfernt werden muß. Hierzu wird an den Stellen der Rohrleitung, an denen ein Eispfropfen gebildet werden soll, ein isolierter Behälter um das Rohr angeordnet, der Anschlüsse für die Zu- und Abfuhr eines Kühlmediums besitzt. Vielfach wird der Behälter aus zwei Halbschalen gebildet, die, nachdem sie am Rohr angebracht sind, miteinander verbunden werden. Als Kühlmittel wird gewöhnlich flüssiger Stickstoff wegen seiner intensiven Kühlwirkung verwendet. Es kann auch Kohlendioxideis verwendet werden, welches in den Behälter eingefüllt wird, der danach mit einem Deckel verschlossen wird. Derartige Vorrichtungen sind beispielsweise bekannt aus der DE-C-2 330 807, der DD-A-77 874, der GB-A-1 303 058 und der US-A-4 112 706.

Bei Verwendung von flüssigem Stickstoff als Kühlmittel ist eine sorgfältige Abdichtung an den Stirnwänden des Behälters, die von der Rohrleitung durchdrungen werden, notwendig, damit dort keine Stickstoffverluste entstehen. Wenn man es nur mit einem bestimmten Rohrdurchmesser zu tun hat, beispielsweise einer Pipeline, ist dies unproblematisch, da man nur einen oder wenige Behälter bereit halten muß, die dem Rohrdurchmesser entsprechende Öffnungen in den Stirnwänden der Behälter besitzen. Die Abdichtung zwischen Rohrleitung und Stirnwand erfolgt gasdicht durch einen wiederentfernbaren, tieftemperaturtauglichen Fugenkitt. In der Regel lohnt es sich aber für den Betreiber eines Rohrleitungssystems nicht, derartige Einfriervorrichtungen bereit zu halten. Es ist effektiver, im Bedarfsfall die Leistung eines entsprechenden Serviceunternehmens in Anspruch zu nehmen. Ein solches Serviceunternehmen muß daher eine Vielzahl an Behältern bereithalten, um flüssigkeitsführende Rohrleitungen mit den unterschiedlichsten Durchmessern einfrieren zu können. Es entstehen hierdurch erhebliche Investitions- und Lagerhaltungskosten. Aus der DD-A-77 874 ist es zwar bekannt, in den Stirnwänden des Behälters auswechselbare Einsätze mit dem jeweiligen Rohrdurchmesser angepaßten Profilöffnungen vorzusehen, um auf diese Weise mit nur einem Behälter Rohre unterschiedlichster Durchmesser mit Kühlmittel beaufschlagen zu können. Bei dieser bekannten Vorrichtung wird als Kühlmittel jedoch Kohlendioxideis verwendet. Hierbei bereiten weder die Abdichtung der Einsätze gegen die Stirnwand und die Rohrleitung, noch die Temperaturversprödung besondere Schwierigkeiten, da Kohlendioxideis nur eine Temperatur von rund $-79\,°C$ besitzt. Bei Verwendung von flüssigem Stickstoff mit einer Temperatur von rund $-196\,°C$ ließen sich derartige auswechselbare Einsätze bisher nicht verwenden, da kein Werkstoff bekannt war, der gleichzeitig preiswert, gut isolierend und nicht kälteversprödbar ist, sowie durch einen wiederentfernbaren tieftemperaturtauglichen Fugenkitt gasdicht gegen die Rohrleitung und die Stirnwand des Behälters abgeschlossen werden kann. An sich wären zwar auswechselbare Einsätze aus PTFE geeignet, jedoch ist dieser Werkstoff so teuer, daß sich bei seiner Verwendung keine Kostenersparnis realisieren ließe.

Der Erfindung liegt die Aufgabe zugrunde, bei einer Vorrichtung zum Einfrieren einer Flüssigkeit in einer Rohrleitung zwecks Absperrung der Rohrleitung durch einen Eispfropfen, bestehend aus einem die Rohrleitung umgebenden isolierten Behälter mit Anschlüssen für die Zu- und Abfuhr eines tiefkalten Kühlmediums, sowie auswechselbaren Einsätzen, die in die von der Rohrleitung durchdrungenen Stirnwände des Behälters einsetzbar sind, um eine Anpassung an unterschiedliche Rohrdurchmesser zu ermöglichen, auswechselbare Einsätze zu schaffen, die für die Verwendung von flüssigem Stickstoff als Kühlmedium geeignet sind.

Gemäß der Erfindung wird dies dadurch erreicht, daß die Einsätze aus Hartpapier bestehen.

Hartpapier ist ein preiswerter Werkstoff, der beispielsweise unter der Bezeichnung Pertinax im Handel ist. Überraschenderweise versprödet er bei den Temperaturen des flüssigen Stickstoffs nicht so stark wie beispielsweise Kunststoffe, die deshalb für den erfindungsgemäßen Zweck unbrauchbar sind. Gleichzeitig besitzt Hartpapier gute Isolationseigenschaften, so daß keine Stickstoffverluste infolge mangelhafter Isolation entstehen. Die Hartpapiereinsätze können darüber hinaus mit tieftemperaturtauglichem Fugenkitt ohne Schwierigkeiten gegen die Stirnwand und das Rohr gasdicht abgeschlossen werden. Der Fugenkitt läßt sich nach Beendigung der Arbeiten problemlos wieder entfernen.

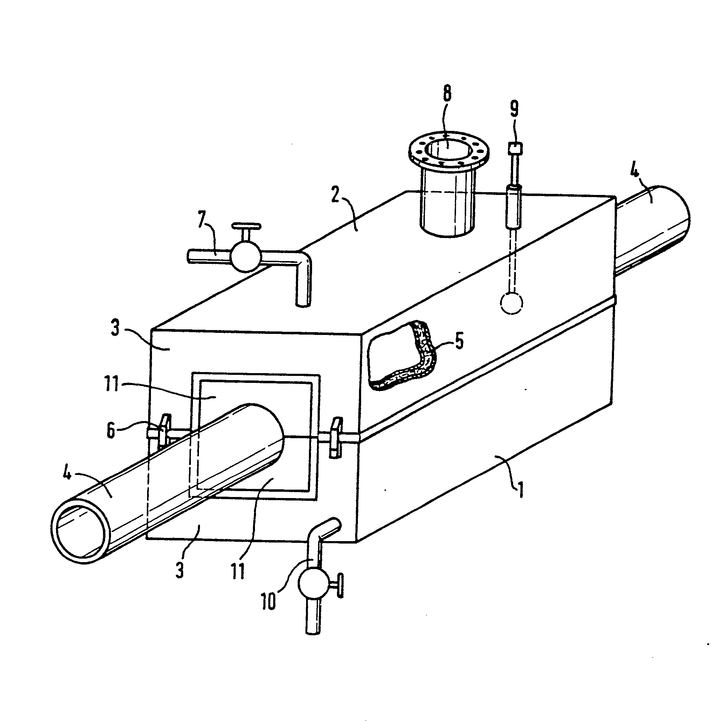

Die Zeichnung veranschaulicht ein Ausführungsbeispiel der Erfindung in perspektivischer Darstellung.

Die in der Zeichnung dargestellte Vorrichtung besteht aus den Schalen 1 und 2, die zusammen mit den Stirnwänden 3 den das Rohr 4 umgebenden Behälter bilden. Die Schalen 1 und 2, sowie die Stirnwände 3 sind doppelwandig ausgeführt, der Zwischenraum ist mit einer Isolation 5 ausgefüllt. Die Schalen 1 und 2 werden durch vier Schnellverschlüsse 6 zusammengehalten. Die Schale 2 besitzt einen Anschluß 7 für die Zufuhr des flüssigen Stickstoffes und einen Anschluß 8 für die Abfuhr des verdampften Stickstoffes. Die Höhe des Stickstoffspiegels im Behälter und damit die Zufuhr des flüssigen Stickstoffes wird durch den Schwimmerschalter 9 geregelt. Die Schale 1 besitzt einen Anschluß 10 zum Ableiten des flüssigen Stickstoffs nach Beendigung der Arbeiten aus dem Behälter. Erfindungsgemäß sind in den Stirnwänden 3 auswechselbare Einsätze 11 aus Hartpapier befestigt, die dem jeweiligen Durchmesser des Rohres 4 angepaßt sind. Die Stirnwände 3 besitzen zu diesem Zweck Führungsnuten, in welche die Einsätze 11 hineingesteckt werden. Der gasdichte Abschluß der Einsätze 11 gegen die Stirnwände 3 und das Rohr 4 wird mit einem tieftemperaturtauglichen Fugenkitt bewerkstelligt, der nach Beendigung der Arbeiten ohne Schwierigkeiten wieder entfernt werden kann.

Die Schalen 1 und 2 besitzen vorzugsweise eine rechteckige Form, da hierdurch sowohl der Transport als auch die Montage erleichtert wird. Die Vorrichtung kann auch bei Rohren verwendet werden, die nicht der tiefen Temperatur des flüssigen Stickstoffs ausgesetzt werden dürfen, beispielsweise Kunststoffrohre. Derartige Rohre würden bei der Anwendung von flüssigem Stickstoff als Kühlmittel verspröden und zerstört werden. In derartigen Fällen verwendet man ein Trägermittel, welches mit flüssigem Stickstoff vermischt wird und im Kreislauf durch den Behälter gepumpt wird. Die Wahl des Trägermittels richtet sich nach dem gewünschten Temperaturniveau, beispielsweise sind Petroläther, Methanol und Alkohol geeignet. Das Gemisch aus Trägermittel und flüssigem Stickstoff wird in einem eigenen Mischbehälter hergestellt, von dort durch den Anschluß 10 in den Behälter eingeführt und durch den Anschluß 8 im Kreislauf zurück in den Mischbehälter geführt. Am Anschluß 8 ist in diesem Fall ein Temperaturfühler angeordnet, mit dessen Hilfe die Stickstoffzufuhr in den Mischbehälter geregelt wird.

Die Erfindung ermöglicht es, mit nur einem Behälter Rohrverschlüsse in Rohrleitungen unterschiedlicher Durchmesser durch Bildung von Eispfropfen in der Rohrleitung herzustellen. Selbstverständlich ist die Bildung von Eispfropfen nicht auf Wasser beschränkt, sondern umfaßt alle gefrierbaren Flüssigkeiten, wie z. B. Öle, Öl-Wasser-Emissionen, Salzwasser-Paraffin-Emulsionen, Calciumchlorid-Sole, Methanol und Benzin. Praktisch erprobt wurde ein Set aus 6 Behältern, von denen der erste einsetzbar ist für Rohrdurchmesser von 20, 25, 32, 40, 50 und 65 mm, der zweite einsetzbar für Rohrdurchmesser von 80, 100 und 125 mm, der dritte einsetzbar für Rohrdurchmesser von 150, 175 und 200 mm, der vierte einsetzbar ist für Rohrdurchmesser von 200, 250 und 300 mm, der fünfte einsetzbar ist für Rohrdurchmesser von 350 und 400 mm und der sechste einsetzbar ist für Rohrdurchmesser von 500 und 600 mm. Ohne Schwierigkeiten können im Bedarfsfall auch noch am Einsatzort auswechselbare Einsätze 11 für dazwischenliegende Rohrdurchmesser zurechtgeschnitten werden.

## Patentanspruch

Vorrichtung zum Einfrieren einer Flüssigkeit in einer Rohrleitung (4) zwecks Absperrung der Rohrleitung durch einen Eispfropfen, bestehend aus einem die Rohrleitung umgebenden isolierten Behälter (1, 2, 3), mit Anschlüssen (7, 8) für die Zu- und Abfuhr eines tiefkalten Kühlmediums, sowie auswechselbaren Einsätzen (11), die in die von der Rohrleitung durchdrungenen Stirnwand (3) des Behälters einsetzbar sind, um eine Anpassung an unterschiedliche Rohrdurchmesser zu ermöglichen, dadurch gekennzeichnet, daß die Einsätze aus Hartpapier bestehen.

## Claim

Device for freezing a liquid in a pipe (4) for the purpose of shut-off the pipe by means of an ice stopper consisting of a pipe surrounding insulated vessel (1, 2, 3), with connections (7, 8) for supply and discharge of an extremely cold coolant as well as replaceable insets (11) which may be inserted in the front wall (3) pierced by the pipe of the vessel in order to allow an adjustment to the different pipe diameters, characterized by the fact that the insets consist of hard paper.

## Revendication

Dispositif pour congeler un liquide dans une tuyauterie (4) pour boucher la tuyauterie à l'aide d'un bouchon de produit gelé, dispositif composé d'un récipient (1, 2, 3) isolé, entourant la tuyauterie avec des ajutages (7, 8) pour l'alimentation et l'évacuation d'un fluide de refroidissement à basse température ainsi que des garnitures interchangeables (11) qui sont susceptibles d'être placées dans les parois frontales (3) du récipient traversées par la tuyauterie pour permettre une adaptation à des diamètres de tuyau, différents, dispositif caractérisé en ce que les garnitures sont en carton.